# EUROPÄISCHE PATENTSCHRIFT

(11) **EP 2 366 625 B1**
(45) Veröffentlichungstag und Bekanntmachung des Hinweises auf die Patenterteilung: **20.05.2015**
(21) Anmeldenummer: 11001798.5
(22) Anmeldetag: 03.03.2011
(51) Int. Cl.: B64D 27/14, B64D 33/10

(54) **Flugzeugtriebwerk mit optimiertem Ölwärmetauscher**
Aircraft engine with optimised oil heat exchanger
Moteur d'aéronef doté d'un échangeur thermique à huile optimisé

(30) Priorität: 04.03.2010 DE 102010010128
(43) Veröffentlichungstag der Anmeldung: 21.09.2011
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Weber, Joachim

(56) Entgegenhaltungen:
- EP-A1- 1 018 468
- EP-A1- 2 136 052
- DE-A1- 19 524 731

## Beschreibung

Die Erfindung bezieht sich auf ein Flugzeugtriebwerk mit optimiertem Ölwärmetauscher sowie auf ein hierfür zu verwendendes Ejektor-Düsen-Rohr.

Aus dem Stand der Technik (siehe zum Beispiel EP2136052) ist es bekannt, dass bei geringen Anströmgeschwindigkeiten eines Flugzeugs, beispielsweise bei Taxi-Bedingungen oder in der ersten Startphase, keine ausreichende Luftströmung vorhanden ist, um einen ausreichenden Kühleffekt für einen Ölwärmetauscher (luftangeströmter Ölkühler) oder einen anderen Wärmetauscher bereitzustellen.

Deshalb ist es aus dem Stand der Technik bekannt, die Luftströmung zu verstärken. Dies kann durch unterschiedliche Lösungswege erzielt werden, beispielsweise durch einen elektrisch oder mechanisch angetriebenen Ventilator oder durch Einlassklappen, welche mehr Luft zu dem Wärmetauscher zu leiten.

Dabei ist es aus dem Stand der Technik auch bekannt, eine Beschleunigung oder Verstärkung der Luftströmung durch Ejektordüsen vorzunehmen.

Die aus dem Stand der Technik bekannten Lösungen weisen zum einen den Nachteil auf, dass sie nicht unter allen Betriebsbedingungen ausreichend wirksam sind. Zum anderen ergibt sich, bedingt durch die Strömungsführung, ein erhebliches Geräuschpotential, welches unerwünscht ist.

Der Erfindung liegt die Aufgabe zugrunde, ein Flugzeugtriebwerk mit optimiertem Ölwärmetauscher sowie einem Ejektor-Düsen-Rohr zu schaffen, welche bei einfachem Aufbau und einfacher, kostengünstiger Anwendbarkeit die Nachteile des Standes der Technik vermeiden und eine effektive Wärmeübertragung bei geringem Geräuschniveau sicherstellen.

Erfindungsgemäß wird die Aufgabe durch die Merkmalskombination der unabhängigen Ansprüche gelöst, die jeweiligen Unteransprüche zeigen weitere vorteilhafte Ausgestaltungen der Erfindung.

Erfindungsgemäß ist somit vorgesehen, dass das Flugzeugtriebwerk zumindest einen Ölkühler-Wärmekühler/Wärmetauscher aufweist, welcher in einem Hinterkantenbereich einer tragflügelartigen Struktur angeordnet ist. Diese kann ein Pylon zur Aufhängung des Triebwerks oder ein Teil der Tragflügelkonstruktion sein.

Weiterhin ist zumindest ein Strömungseinleitbereich vorgesehen, um Luft aus der Umgebungsströmung dem Ölkühler zuzuführen, welcher in einem Strömungskanal angeordnet ist. Stromab des Ölkühlers ist ein erfindungsgemäßes Ejektor-Düsen-Rohr angeordnet, welches so ausgebildet ist, dass sich eine optimierte Strömung im Bereich des Ejektor-Düsen-Rohrs ergibt. Diese Strömung erzeugt ein im Vergleich zum Stand der Technik erheblich minimiertes Geräuschpotential und führt somit zum einen zu einer Optimierung der Durchströmung des Ölkühlers/Wärmetauschers und zum anderen zu einer drastischen Geräuschminimierung.

Das erfindungsgemäße Ejektor-Düsen-Rohr weist einen über seine Länge im Wesentlichen gleichbleibenden, im Wesentlichen eine ovale oder S-förmige Form aufweisenden Querschnitt auf, welcher hohl ausgebildet ist, um durch das Ejektor-Düsen-Rohr eine zusätzliche Luftströmung einzuführen. Erfindungsgemäß ist vorgesehen, dass am Strömungsvorderkantenbereich des Ejektor-Düsen-Rohrs Austrittsöffnungen/Düsen vorgesehen sind, durch welche die durch das Ejektor-Düsen-Rohr zugeführte Strömung randnah austritt und im Wesentlichen laminar längs der Oberfläche des Ejektor-Düsen-Rohr-Querschnitts strömt.

Zu diesem Zweck weist das erfindungsgemäße Ejektor-Düsen-Rohr an seinem Strömungsvorderkantenbereich eine Anströmleiste auf, welche mit einem abgerundeten oder gebogenen Querschnitt versehen ist. Die Anströmleiste ist mit einer Vielzahl von Nuten versehen, welche sich zur Oberseite und zur Unterseite des Ejektor-Düsen-Rohr-Querschnitts öffnen. Der mittlere Bereich der Nuten ist mit dem Innenraum des Ejektor-Düsen-Rohrs verbunden, so dass die Luftzuführung durch die Nuten sichergestellt ist.

Erfindungsgemäß kann die Anströmleiste in einfacher Weise als gefrästes Bauelement hergestellt werden und mit der restlichen blechartigen Struktur (Biegestruktur) des Ejektor-Düsen-Rohrs verschweißt werden. Hierdurch ergibt sich eine besonders kostengünstige Herstellbarkeit.

Die Wirkungsweise des erfindungsgemäßen Ejektor-Düsen-Rohrs basiert auf der Anordnung der Ejektordüsen an der Anströmkante. Hierdurch erfolgt eine Strömung längs der Oberfläche des Ejektor-Düsen-Rohrs, welche die Wirkungsweise, verglichen mit den aus dem Stand der Technik bekannten Konstruktionen, erheblich steigert. Bei den aus dem Stand der Technik bekannten Ejektor-Düsen-Rohren ist es bekannt, die Düsen an der Abströmkante (Hinterkante) vorzusehen.

Bei der erfindungsgemäßen Ausgestaltung werden somit die Fluidpartikel, welche, austretend aus dem Ölkühler/Wärmetauscher, dem Ejektor-Düsen-Rohr zugeführt werden, durch die Reibung mit den aus den Düsen der Anströmleiste austretenden Fluldpartikeln beschleunigt. Die Geschwindigkeitsdifferenz zwischen den jeweiligen Partikeln erzeugt eine Reibung und überträgt kinetische Energie von der aus den Düsen des Ejektor-Düsen-Rohrs austretenden Strömung auf die aus dem Ölkühler austretende Strömung. Hierdurch wird die gesamte Strömung beschleunigt.

Erfindungsgemäß ist es weiterhin besonders günstig, wenn der Strömungskanal hinsichtlich seiner Geometrie angepasst werden kann. Hierzu ist es besonders günstig, wenn zumindest ein verstellbares Wandelement vorgesehen ist. Bevorzugterweise sind ein oberes und ein unteres verstellbares Wandelement vorgesehen, welche in Form einer Schwenkklappe ausgebildet sind. Hierdurch ist es möglich, den Querschnitt des Strömungskanals zu verändern und, bedingt durch die Strukturierung, die Strömungsverhältnisse weiter zu beeinflussen, insbesondere durch Ausbildung einer zusätzlichen Düse durch die beiden Schwenkklappen.

Im Folgenden wird die Erfindung anhand eines Ausführungsbeispiels in Verbindung mit der Zeichnung beschrieben. Dabei zeigt:
- Fig. 1: eine perspektivische, vereinfachte Darstellung eines Flugzeugtriebwerks mit einer Gasturbine und zwei gegenläufigen Druckpropellern,
- Fig. 2: eine vereinfachte Schnittansicht des erfindungsgemäßen Bereichs mit Ölkühler und Ejektor-Düsen-Rohr,
- Fig. 3: eine vergrößerte Detailansicht, analog Fig. 2, und
- Fig. 4 und 5: vereinfachte perspektivische Darstellung des Ejektor-Düsen-Rohrs sowie der Anströmleiste.

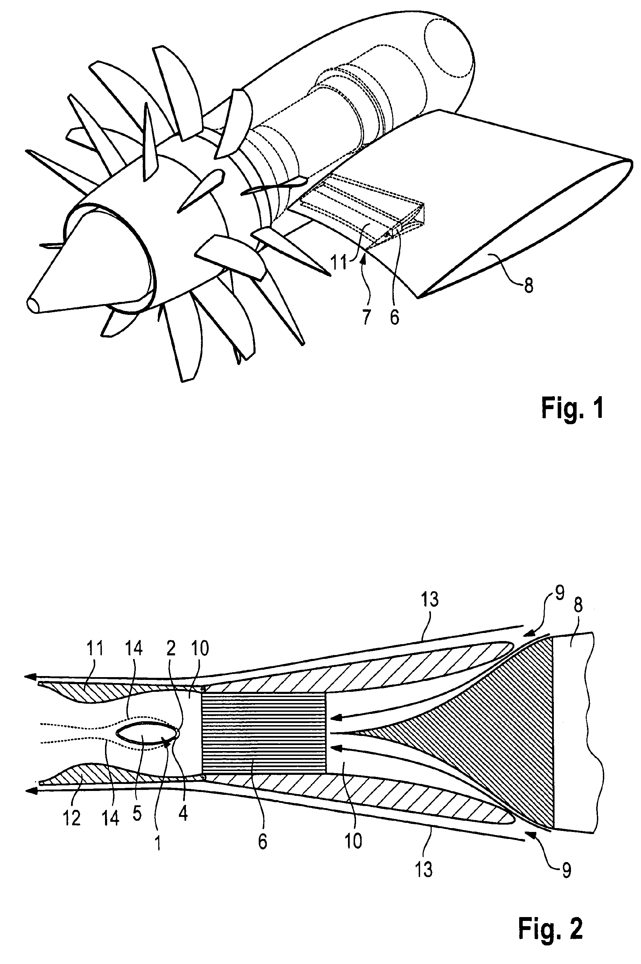

Die Fig. 1 zeigt ein Gasturbinentriebwerk mit zwei gegenläufigen Druckpropellern. Derartige Konstruktionen sind aus dem Stand der Technik bekannt, so dass auf eine detaillierte Beschreibung an dieser Stelle verzichtet werden kann.

Das Gasturbinentriebwerk ist an einer tragflügelartigen Struktur 8 gelagert, beispielsweise einem Pylon oder einer Tragfläche.

Im Abströmbereich der Struktur 8 ist die erfindungsgemäße Anordnung angeordnet, so wie sich dies aus der Darstellung der Fig. 2 ergibt.

Die Fig. 2 zeigt den Abströmbereich der Struktur 8. Dieser weist obere und untere Strömungseinleitbereiche 9 auf, welche jeweils schlitzartig ausgebildet sind. Hierdurch wird ein Teil der über die Struktur 8 strömenden Strömung 13 umgelenkt und einem Strömungskanal 10 zugeführt. In dem Strömungskanal 10 ist ein Ölkühler/Wärmetauscher 6 angeordnet, welcher von der Strömung durchströmt wird.

Bei einer zu geringen Geschwindigkeit der Strömung 13 strömt zu wenig Luft zu dem Ölkühler/Wärmetauscher 6, so dass dessen Wirkungsweise nicht zufriedenstellend ist.

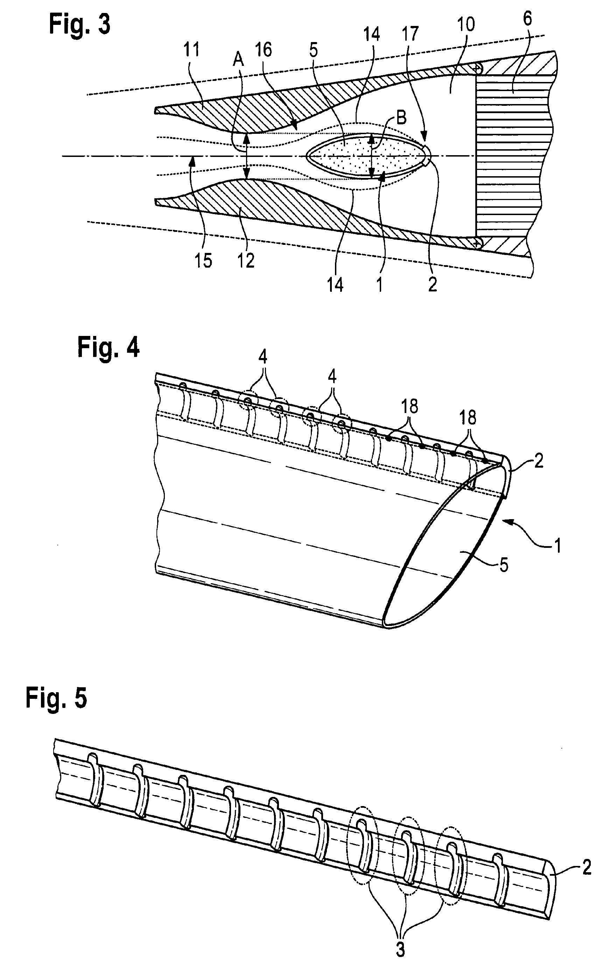

Am Ausströmbereich des Ölkühler/Wärmetauschers 6 ist in dem Strömungskanal 10 ein Ejektor-Düsen-Rohr 1 angeordnet, welches nachfolgend in Verbindung mit den Fig. 3 bis 5 im Einzelnen beschrieben werden wird.

Ebenfalls auf der Ausströmseite des Ölkühlers/Wärmetauschers 6 sind eine obere Schwenkklappe 11 und eine untere Schwenkklappe 12 (strukturierte Wandelemente) angeordnet, welche jeweils um eine im Wesentlichen horizontale Achse verschwenkbar sind. Hierdurch ist eine Strömungsoptimierung möglich, so wie dies nachfolgend beschrieben werden wird.

Die Fig. 3 zeigt eine vergrößerte Darstellung analog Fig. 2.

Das Ejektor-Düsen-Rohr 1 weist einen strömungsoptimierten, im Wesentlichen ovalen, über seine Länge gleichbleibenden Querschnitt auf und ist mit einem Innenraum versehen, durch welchen eine zusätzliche Luftströmung zugeführt werden kann.

An der Anströmseite des Ejektor-Düsen-Rohrs ist eine Anströmleiste 2 angebracht. Diese ist mit einem dickeren Querschnitt versehen und beispielsweise als Frästeil ausgebildet. Der restliche Wandungsbereich des Ejektor-Düsen-Rohrs 1 ist als Blechbiegeteil ausgeführt (siehe auch Fig. 4 und 5).

Durch Austrittsöffnungen 4 (düsenartige Ausnehmung) tritt eine Strömung 14 aus, welche benachbart zu der Kontur des Ejektor-Düsen-Rohrs 1 strömt und hinsichtlich des Strömungsverhaltens optimierbar ist.

Der Bereich des Strömungskanals 10, in welchem das Ejektor-Düsen-Rohr 1 angeordnet ist, wird durch die obere Schwenkklappe 11 und die untere Schwenkklappe 12 konturiert, so dass sich eine Ausströmdüse 15 ergibt, welche zusätzlichen Schub erzeugt.

Die dem Ejektor-Düsen-Rohr 1 zugeführte Luft ist üblicherweise Zapfluft (bleed air) der Gasturbine des Fluggasturbinentriebwerks.

An dem durch den Pfeil 16 dargestellten Bereich ergibt sich eine Optimierung der Strömung und eine Geräuschminimierung, insbesondere durch die Konturierung der Schwenkklappen 11, 12. Die Geräuschminimierung ist ein ganz wesentlicher Aspekt der vorliegenden Erfindung, da die Geräuschentwicklung der ausströmenden Luftströmung im Vergleich zum Stand der Technik erheblich vermindert werden kann. Im Betriebszustand, der in Fig. 3 dargestellt ist, ist der lichte Querschnitt zwischen den Schwenkklappen 11 und 12, der in Fig. 3 als Doppelpfeil A gezeigt ist, gleich oder kleiner, als die maximale Gesamtdicke des ovalen oder S-förmigen Querschnitts des Ejektor-Düsen-Rohrs 1. In Fig. 3 ist diese Dicke durch den Doppelpfeil B dargestellt. Es gilt somit folgende Gleichung: A ≤ B.

Der Pfeil 17 in Fig. 3 zeigt den Austritt der Ejektorströmung am Anströmbereich des Ejektor-Düsen-Rohrs.

Die Fig. 4 und 5 zeigen verdeutlichend die Ausgestaltung, insbesondere der Anströmleiste 2. Diese weist bogenförmig ausgebildete Nuten 3 auf, welche einen im Wesentlichen gleichbleibenden Querschnitt haben und sich entsprechend der bogenförmigen Form der Anströmleiste erstrecken. In die Nuten 3 kann die im Innenraum 5 des Ejektor-Düsen-Rohrs 1 zugeführte Strömung geführt und durch die Düsen 4 ausgeleitet werden. Das Ejektor-Düsen-Rohr kann beispielsweise über Schweißpunkte 18 mit der Blechbiegekonstruktion des Hauptteils des Ejektor-Düsen-Rohrs 1 verbunden werden. Ein wesentlicher Aspekt der vorliegenden Erfindung ist die einfache und kostengünstige Herstellbarkeit des Ejektor-Düsen-Rohrs 1. Dieses kann als einfaches, kostengünstiges Blech-Biege-Teil ausgebildet werden, wobei die Querschnittsform einfach und kostengünstig realisiert werden kann. Die Anströmleiste 2 ist ebenfalls als einfaches, kostengünstiges Frästeil herstellbar, welches mit der Blech-Biege-Konstruktion des eigentlichen Körpers des Ejektor-Düsen-Rohrs in einfacher Weise verbunden werden kann, beispielsweise durch Schweißverbindungen. Durch die Fräskonstruktion der Anströmleiste können die Nuten einfach und kostengünstig erzeugt werden, ebenso die Austrittsöffnungen für die Strömung, welche aus dem Ejektor-Düsen-Rohr austritt.

### Bezugszeichenliste

- 1: Ejektor-Düsen-Rohr
- 2: Anströmleiste
- 3: Nut
- 4: Düse/Ausnehmung/Austrittsöffnung
- 5: Innenraum
- 6: Ölkühler/Wärmetauscher
- 7: Hinterkantenbereich
- 8: Struktur
- 9: Strömungseinleitbereich
- 10: Strömungskanal
- 11, 12: Wandelement/Schwenkklappe
- 13, 14: Strömung
- 15: Ausströmdüse
- 16: Geräuschminderung
- 17: Strömungszuführung
- 18: Schweißpunkt

## Patentansprüche

1. Ejektor-Düsen-Rohr mit einem über seine Länge im Wesentlichen gleichbleibenden, eine im Wesentlichen ovale Form aufweisenden hohlen Querschnitt, wobei an einem Strömungsvorderkantenbereich des Ejektor-Düsen-Rohrs (1) eine mit einem teilkreisförmigen Querschnitt versehene Anströmleiste (2) angeordnet ist, welche mit einer Vielzahl von Nuten (3) versehen ist, welche zur Oberfläche und zur Unterfläche des Ejektor-Düsen-Rohrs (1) münden (4) und mit einem durch das hohle Profil gebildeten Innenraum (5) des Ejektor-Düsen-Rohrs (1) in Verbindung sind.

2. Ejektor-Düsen-Rohr nach Anspruch 1, **dadurch gekennzeichnet, dass** der Körper des Ejektor-Düsen-Rohrs (1) eine geringere Wanddicke aufweist, als die Anströmleiste (2).

3. Ejektor-Düsen-Rohr nach Anspruch 1 oder 2, **dadurch gekennzeichnet, dass** die Nuten (3) in Schnittebenen des Ejektor-Düsen-Rohrs (1) senkrecht zu dessen Längsachse angeordnet sind.

4. Flugzeugtriebwerk mit optimiertem Ölwärmetauscher mit zumindest einem Ölkühler (6), welcher in einem Hinterkantenbereich (7) einer tragflügelartigen Struktur (8) angeordnet ist, wobei zumindest ein Strömungseinleitbereich (9) zur Zuführung einer Umgebungsluftströmung zu dem Ölkühler (6) vorgesehen ist, wobei der Ölkühler (6) in einem Strömungskanal (10) angeordnet ist und wobei stromab des Ölkühlers (6) in dem Strömungskanal (10) ein Ejektor-Düsen-Rohr (1) nach einem der Ansprüche 1 bis 3 angeordnet ist.

5. Flugzeugtriebwerk nach Anspruch 4, **dadurch gekennzeichnet, dass** der Strömungskanal (10) stromab des Ölkühlers (6) durch zumindest ein verstellbares Wandelement (11, 12) gebildet wird.

6. Flugzeugtriebwerk nach Anspruch 5, **dadurch gekennzeichnet, dass** das Wandelement in Form einer strukturierten Schwenkklappe (11, 12) ausgebildet ist.

7. Flugzeugtriebwerk nach Anspruch 6, **dadurch gekennzeichnet, dass** der Strömungskanal (10) durch eine obere (11) und eine untere (12) strukturierte Schwenkklappe ausgebildet ist.

## Claims

1. Ejector nozzle tube having along its length an essentially constant, essentially oval hollow cross-section, with an inflow lip (2), having a pitch-circle type cross-section, being arranged at a flow leading-edge area of the ejector nozzle tube (1). The inflow lip (2) is provided with a plurality of grooves (3) issuing (4) to the top or bottom surfaces of the ejector nozzle tube (1) and connecting to an interior (5) of the ejector nozzle tube (1) formed by the hollow profile.

2. Ejector nozzle tube in accordance with Claim 1, **characterized in that** the body of the ejector nozzle tube (1) has a smaller wall thickness than the inflow lip (2).

3. Ejector nozzle tube in accordance with Claim 1 or 2, **characterized in that** the grooves (3) are arranged in sectional planes of the ejector nozzle tube (1) perpendicular to the longitudinal axis of the latter.

4. Aircraft engine with optimized oil heat exchanger with at least one oil cooler (6) disposed in a trailing-edge area (7) of an airfoil-type structure (8) with at least one flow introduction area (9) being provided to supply an ambient airflow to the oil cooler (6) disposed in a flow duct (10), and with an ejector nozzle tube (1) in accordance with one of the Claims 1 to 3 being arranged downstream of the oil cooler (6) in the flow duct (10).

5. Aircraft engine in accordance with Claim 4, **characterized in that** the flow duct (10) downstream of the oil cooler (6) is formed by at least one variable wall element (11, 12).

6. Aircraft engine in accordance with Claim 5, **characterized in that** the wall element is designed in the form of a structured pivotal flap (11, 12).

7. Aircraft engine in accordance with Claim 6, **characterized in that** the flow duct (10) is formed by an upper (11) and a lower (12) structured pivotal flap.

## Revendications

1. Tube de buse d'éjecteur avec une section transversale creuse constante sur sa longueur pour l'essentiel, présentant une forme ovale pour l'essentiel, sachant que sur une zone d'écoulement du bord d'attaque du tube de buse d'éjecteur (1) est disposée une nervure d'afflux (2) dotée d'une section transversale en forme de cercle primitif et munie d'une pluralité de gorges (3) qui débouchent (4) vers la face supérieure et vers la face inférieure du tube de buse d'éjecteur (1), et sont reliées à un espace intérieur (5) du tube de buse d'éjecteur (1), ledit espace intérieur étant formé par le profil creux.

2. Tube de buse d'éjecteur selon la revendication n° 1, **caractérisé en ce que** le corps du tube de buse d'éjecteur (1) présente une épaisseur de paroi inférieure à celle de la nervure d'afflux (2).

3. Tube de buse d'éjecteur selon la revendication n° 1 ou n° 2, **caractérisé en ce que** les gorges (3) sont disposées dans des plans de coupe du tube de buse d'éjecteur (1) perpendiculairement à l'axe longitudinal dudit tube.

4. Moteur d'avion doté d'un échangeur thermique à huile optimisé, avec au moins un refroidisseur d'huile (6) qui est disposé dans une zone du bord de fuite (7) d'une structure (8) semblable à une aile portante, sachant qu'est prévue au moins une zone d'introduction d'écoulement (9) pour amener au refroidisseur d'huile (6) un flux d'air ambiant, que le refroidisseur d'huile (6) est placé dans un canal d'écoulement (10) et qu'en aval du refroidisseur d'huile (6) est disposé dans le canal d'écoulement (10) un tube de buse d'éjecteur (1) selon une des revendications n° 1 à n° 3.

5. Moteur d'avion selon la revendication n° 4, **caractérisé en ce que** le canal d'écoulement (10) en aval du refroidisseur d'huile (6) est formé par au moins un élément de paroi (11, 12) variable.

6. Moteur d'avion selon la revendication n° 5, **caractérisé en ce que** l'élément de paroi est conçu sous la forme d'un clapet pivotant (11, 12) structuré.

7. Moteur d'avion selon la revendication n° 6, **caractérisé en ce que** le canal d'écoulement (10) est formé par un clapet pivotant structuré supérieur (11) et un clapet pivotant structuré inférieur (12).
